# EUROPEAN PATENT APPLICATION

(11) **EP 1 609 557 A1**
(43) Date of publication of application: **28.12.2005**
(21) Application number: 05253849.3
(22) Date of filing: 21.06.2005
(51) Int. Cl.: B23K 26/14

(54) **Arc starting method in a hybrid welding process using laser and electric arc, welding device for performing the method, and controller**

(30) Priority: 25.06.2004 JP 2004187506
(71) Applicant: FANUC LTD, Minamitsuru-gun, Yamanashi 401-0597 (JP)
(72) Inventor: Takahashi, Hiromitsu, Minamitsuru-gun, Yamanashi 401-0310 (JP); Furuya, Yoshitake FANUC Manshonharimomi, Minamitsuru-gun, Yamanashi 401-0511 (JP)
(74) Representative: Billington, Lawrence Emlyn

(57) **Abstract**

From the robot controller, a laser irradiation start command is issued to the laser oscillator, together with a laser power command condition before arc generation. The laser power command before arc generation is used to suppress an amount of heat input, and is selected from among the first to the third laser power commands according to conditions of the material and thickness of base metal and the like. An arc welding start command is issued to the arc welding power source, together with welding voltage and wire feeding speed commands. Before the arc welding command is issued and the wire comes into contact with the base metal, the voltage becomes no-load voltage. Also, the slow wire feeding speed is instructed before the arc is generated. When the wire comes into contact with the base metal and the arc is generated, it is detected and the laser power command condition is changed to a condition for processing.

## Description

### BACKGROUND OF THE INVENTION

### 1. Field of the Invention

The present invention relates to a technique of arc welding attended with laser irradiation, and more particularly to an arc starting method in arc welding attended with laser irradiation, a welding device for performing the arc welding, and a controller for controlling arc starting in the arc welding.

### 2. Description of the Prior Art

Hybrid welding comprising laser welding and arc welding has begun to come into proliferation in recent years. According to the hybrid welding, these two welding techniques are combined, whereby merits in which high-speed welding that could not be achieved by the arc welding is made possible, and gap welding that could not be carried out by the laser welding is made possible can be obtained.

However, a problem that the laser welding has not presented, and a problem that the arc welding has not presented also appear. First, the arc welding is involved, whereby a problem "arc start error" that has not existed in the laser welding comes up. This arc start error occurs when an arc is not smoothly generated between a welding wire and base metal (object to be welded) depending upon the base metal and a tip state of the welding wire, and is conventionally known as a troublesome problem for decreasing an automation rate in an automation line.

As an avoidance method for the arc start error, techniques for cleaning the base metal to remove dirt, cutting the wire before arc starting and the like are known, but it cannot be completely solved.

In the case of the hybrid welding, since it is possible to generate plasma in a laser irradiated portion which receives laser irradiation, it is known that the arc is conducted to the laser irradiated portion and a situation in which the arc is liable to be generated is brought about. Improvement in the arc start is expected on the basis of this phenomenon.

On the other hand, a laser beam is irradiated, whereby a harmful influence is also caused. In other words, when it is commanded at the same time to irradiate the laser beam and to start arc discharge, it takes some time for the welding wire to come into contact with the base metal on an arc discharge side due to a mechanism for generating the arc. Since it varies with the wire extension, this time period is not constant always. On the other hand, on the laser side, the irradiation is started only with delay due to transfer of the command, and a time period required for it is exceedingly short. For the reason, in general, the laser irradiation is started earlier than the arc discharge.

If this timing lag is great and a time period in which only laser irradiation occurs without generating any arc has become long, a problem will be caused in welding quality. Particularly, in sheet welding, the risk of causing the so-called burn is increased at a welding start position. In order to avoid this problem, there has been proposed, in Japanese Patent Application Laid-Open No. 2004-017059, a contrivance for reducing a time period set to only laser irradiation to the minimum by synchronizing laser irradiation start timing to a retract start mechanism. In order to apply technique relating to this proposal, however, it becomes necessary to interlock with an arc welding electric source which enables a special system called "retract start" to be realized.

### SUMMARY OF THE INVENTION

According to the present invention, during a time period in which the arc is undischarged (before arc discharge starts) and only laser beams are irradiated, burn is prevented from being caused by performing laser irradiation power control which is different from a power control to be done after arc discharge starts. In other words, before the arc is detected, as regards a laser irradiation power value, a command is issued with a comparatively low value (a value changing in accordance with a laser irradiation power transition pattern) preset in advance, and after the arc is detected, by changing into a power command suitable for the processing condition, an occurrence of the burn is avoided while preventing the arc start error. In this respect, distinguishing between before start of arc discharge and after start of arc discharge can be simply executed through the use of an arc detection signal provided for a general arc welding electric source, and there is no need for addition of special means for that purpose.

According to an arc starting method in arc welding attended with laser irradiation of the present invention, laser beams are irradiated at a welding start position on base metal targeted for welding or in its vicinity, and an arc welding wire is fed and welding voltage is outputted, whereby an arc is caused to generate between the base metal targeted for welding and the arc welding wire. According to this arc welding startingmethod, a first-class laser irradiation power command, determined in advance for the irradiation prior to start of discharge, is outputted before generation of the arc is detected, and a second-class laser irradiation power command, determined in advance for the irradiation subsequent to the start of discharge and suitable for welding and different from said first-class laser irradiation power command, is outputted after the generation of the arc is detected.

In this case, the first-class laser irradiation power command causes the laser irradiation to be performed at the predetermined first laser irradiation power value, and the second-class laser irradiation power command is to cause the laser irradiation to be performed at the predetermined second laser irradiation power value higher than the first laser irradiation power value.

Also, the first-class laser irradiation power command may cause the laser irradiation to be performed in accordance with a predetermined laser irradiation power transition pattern, and the laser irradiation may be performed in a pulse shape. Further, from among material and plate thickness of the base metal targeted for welding, a kind of shield gas and type of the arc welding wire, the laser irradiation power command value in the first-class laser irradiation power command, or the laser irradiation power transition pattern can be also selected or changed correspondingly to at least one setting.

A welding device for carrying out the arc starting method in the arc welding attended with laser irradiation has arc starting means for generating an arc between base metal targeted for welding and the arc welding wire by irradiating laser beams at a welding start position on base metal targeted for welding or in its vicinity, feeding an arc welding wire and outputting welding voltage.

A controller for controlling arc start in the arc welding attended with laser irradiation according to the present invention irradiates laser beams at a welding start position on base metal targeted for welding or in its vicinity, feeds an arc welding wire and outputs welding voltage, whereby an arc is caused to generate between the base metal targeted for welding and the arc welding wire. This controller has means for outputting, before generation of the arc is detected, a first-class laser irradiation power command determined in advance for the irradiation prior to start of discharge, and means for outputting, after the generation of the arc is detected, a second-class laser irradiation power command determined in advance for the irradiation subsequent to the start of discharge, suitable for welding and different from said first-class laser irradiation power command.

In this case, the first-class laser irradiation power command causes the laser irradiation to be performed at the predetermined first laser irradiation power value, and the second-class laser irradiation power command causes the laser irradiation to be performed at the predetermined second laser irradiation power value higher than the first laser irradiation power value.

Also, the first-class laser irradiation power command may cause the laser irradiation to be performed in accordance with the predetermined laser irradiation power transition pattern, and the laser irradiation may be performed in a pulse shape. Further, from among material and plate thickness of the base metal targeted for welding, and a kind of shield gas and type of the arc welding wire, the laser irradiation power command value in the first-class laser irradiation power command, or the laser irradiation power transition pattern can be also selected or changed correspondingly to at least one setting.

According to the present invention, in an arc welding attended with laser irradiation, occurrence of burn at a welding start position is avoided, so that welding quality is improved.

### BRIEF DESCRIPTION OF THE DRAWINGS

The foregoing and other purposes, aspects and advantages of the present invention will be better understood from the following description of preferred embodiments with reference to the attaching drawings, in which:
FIG. 1A and FIG. 1B are views illustrating an embodiment in which the present invention has been applied to an application that executes the arc welding (hybrid welding) attended with laser irradiation through the use of a robot, and FIG. 1A shows an outline of the general structure and FIG. 1B shows a processing head portion and its periphery;
FIG. 2 is a flow chart illustrating welding start processing to be executed in the embodiment of FIGS. 1A and 1B;
FIG. 3 shows an example of a pattern ID to be set in the embodiment of FIGS. 1A and 1B;
FIGS. 4A to 4C show an example of the laser irradiation power transition pattern to be set in the embodiment of FIGS. 1A and 1B, and FIG. 4A shows an example of power-gradually-decreasing type continuous irradiation, FIG. 4B shows an example of power-gradually-decreasing type pulse-like irradiation, and FIG. 4C shows an example of power-constant type continuous irradiation respectively; and
FIG. 5 is a timing chart illustrating the process of welding start to be executed in the embodiment of FIGS. 1A and 1B.

### DETAILED DESCRIPTION OF THE PREFERRED EMBODIMENTS

FIG. 1A shows an outline of the general structure according to the embodiment in which the present invention has been applied to an application that executes the arc welding (hybrid welding) attended with laser irradiation through the use of a robot. As shown in this figure, to the robot controller 1, a robot (mechanism portion of a hybrid welding robot) 2, an arc welding device 3, and a laser oscillator 4 are connected. The arc welding device 3 and the laser oscillator 4 themselves are well-known respectively. In other words, the arc welding device 3 has a welding power source section, an arc generation detection section, a wire feeding portion (since any of them is well-known, individual illustration is omitted) and the like. Also, for the laser oscillator 4, a YAG laser oscillator has been used in this case, and its laser beam output portion is provided with a shutter (the illustration is omitted) in a well-known aspect, which is open-close controlled in accordance with a command from the robot controller 1 as described later.

A processing head portion designated by reference numeral 10 has been mounted in the vicinity of the tip of the arm of the robot 2, and has an arc welding torch 11 and a laser irradiation nozzle 14. At a suitable place (for example, in the vicinity of the base of the forearm) of the robot 2, a wire feeding device 5 is installed, and a welding wire (however, inserted through within feeding piping) 7 drawn out of a welding wire outgoing portion (illustration omitted) of the welding device 3 is to be fed to the arc welding torch 11 via the wire feeding device 5. Also, the laser beam output portion (illustration omitted) of the laser oscillator 4 and the irradiation nozzle 14 are connected through the optical fiber 6.

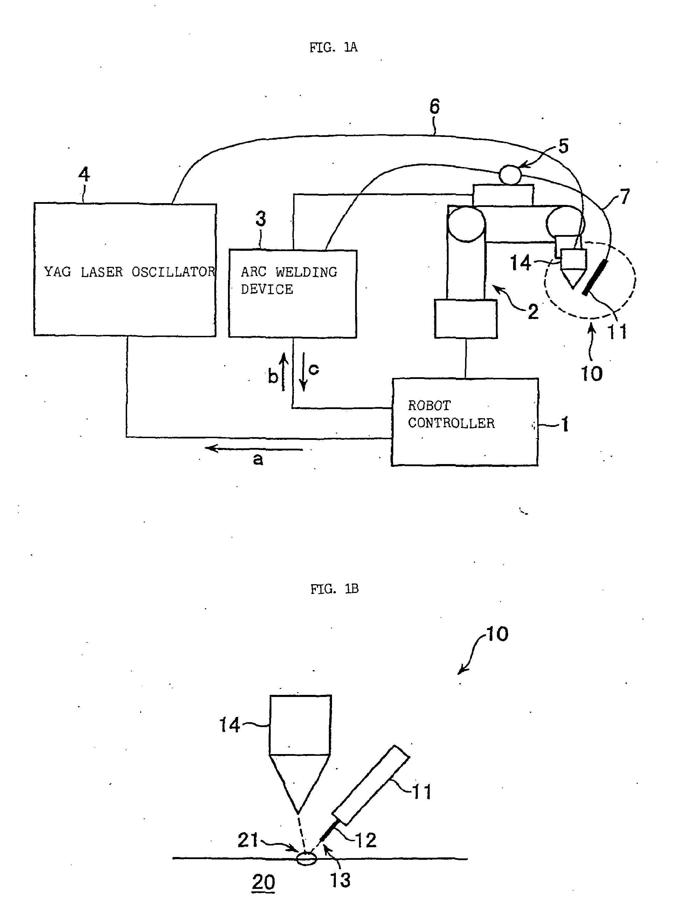

As shown in the enlarged FIG. 1B for the processing head portion 10, the arc welding torch 11 takes an inclined posture toward the surface of the base metal (object to be welded) 20 in the present example, and generates an arc between the tip 13 of the welding wire (the conductor is exposed) 12 to be fed out of the tip and the surface of the base metal 20 for arc welding. On the other hand, a laser irradiation nozzle 14 has been installed so as to cause the nozzle to perform a laser irradiation in the vertical direction onto a position substantially same as the position where the tip 13 of the welding wire 12 comes into contact with the base metal 20. Reference numeral 21 denotes the arc welding start position 21, and after an arc is generated in accordance with a procedure to be described later and arc welding is started, a welding point also usually moves in accordance with the movement of the robot along a processing line to be designated by a processing program.

Although the robot controller 1 according to the present embodiment is a controller for the hybrid welding robot for integrating and controlling the entire system, the robot controller 1 is not particularly different from the normal, well-known one in the internal structure and basic functions of the controller except that it is provided with software for executing the processing to be described later. Therefore, the description will be omitted. The operations (such as oscillation ON/OFF, shutter open/close, power increase/decrease) of the laser oscillator 4 are adapted to be controlled by various instructions 'a' to be transmitted from the controller 1 to the laser oscillator 4, and specific contents of commands to be transmitted in the processing relating to the arc generation will be described later.

Also, the operations of the welding device 3 including the welding wire feeding device 5 are controlled (control of welding voltage, control of welding current, control of wire feeding speed and the like) by various commands 'b' to be transmitted to the arc welding device 3, and from the arc generation detection section of the welding device 3, a signal 'c' for representing the circumstances of arc generation/non-generation has been adapted to be transmitted to the robot controller 1 whenever the need arises (for example, when requested from the robot controller 1 or repeatedly in a short period).

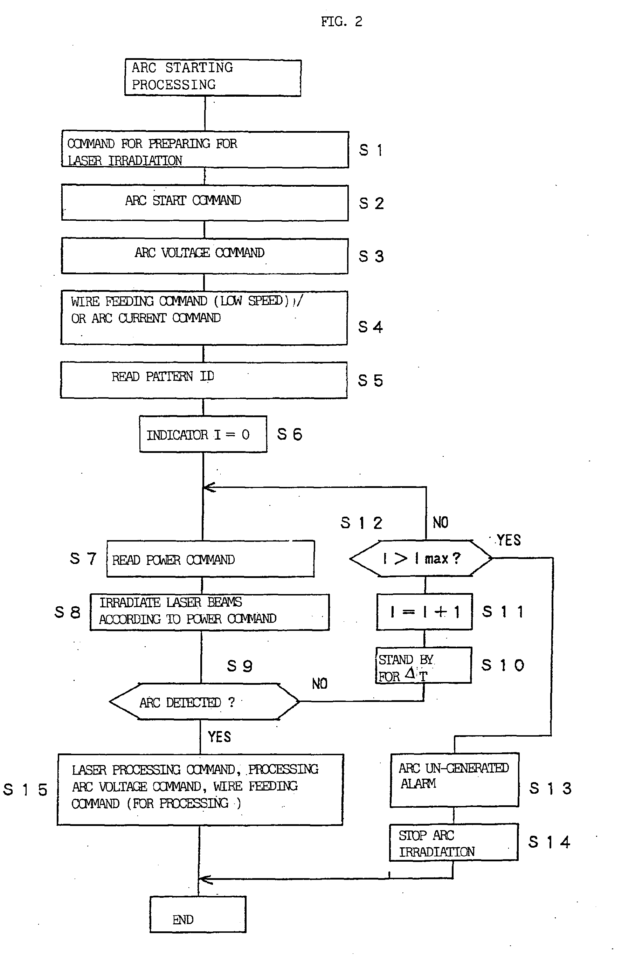

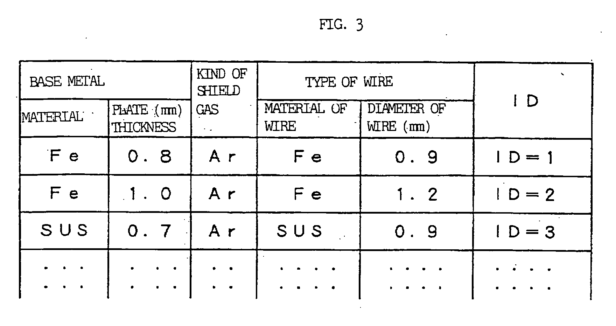

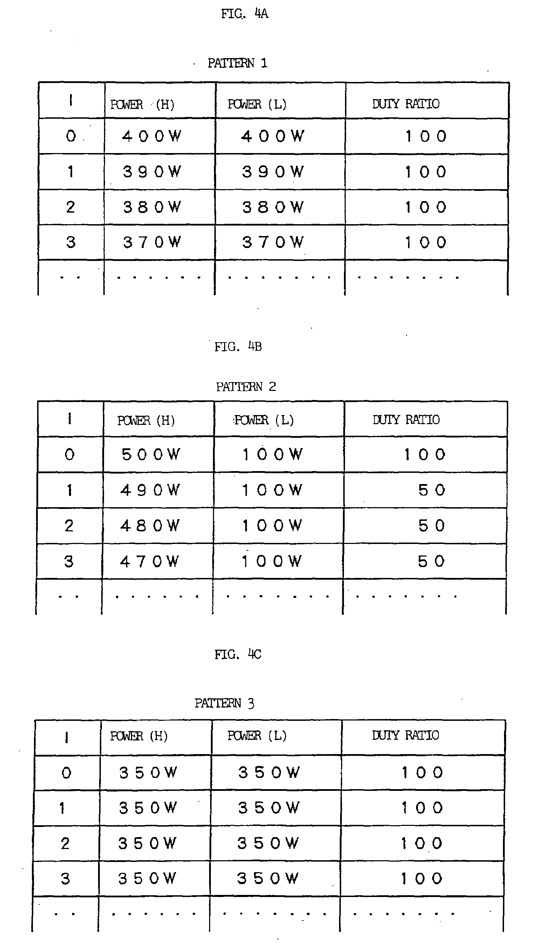

When starting the hybrid welding through the use of the above-described structure and functions, as described previously, the laser irradiation is performed prior to generating an arc, and after the arc is generated, the arc welding attended with laser irradiation is actually to be started. In the present embodiment, during this time period, the processing, the outline of which has been shown in FIG. 2, will be performed through the use of the robot controller 1. Also, prior to the execution of the processing concerned, various parameters, preset data and the like relating to the processing concerned are stored in the memory within the robot controller 1. These data include data of the pattern ID exemplified in FIG. 3, data of the laser irradiation power transition pattern exemplified in FIG. 4, and stand-by time ΔT (See step S10 to be described below) relating to a progress of the laser irradiation power transition. The main points of each step are given below.

### Step S1;

First, a command for preparing for laser irradiation is outputted to the laser oscillator 4. Thereby, an excitation source (for example, excitation lamp) and the like of the laser oscillator 4 are started, and a stand-by state for the laser irradiation starts. At this point of time, however, the shutter has been closed, and no laser beam is irradiated from a laser irradiation nozzle 14.

### Steps S2, S3 and S4;

A command for preparing for arc start, an arc voltage command and a wire feed command are outputted to the welding device 3. Thereby, the power source of the welding device 3 is started, and welding voltage is applied to the welding wire 12 in accordance with the welding voltage command. Also, feeding of a welding wire 7 is started at feeding speed that the wire feeding command designates. In this case, the welding voltage that the welding voltage command designates is set to a value suitable to induce arc generation in combination with laser irradiation to be described later, and is not necessarily the same one as a value during welding after the arc is generated.

Also, the feeding speed that the wire feeding command designates is generally often set to a lower speed than the feeding speed during welding after the arc is generated. In this respect, as well known, depending upon the type of the power source section which the welding device 3 has, in place of a command for designating the wire feeding speed, a current command having relationship equivalent to it may also be outputted. In this respect, when a pulse arc welding power source is used, commands for frequency, base current and the like may be also required in addition to voltage command and wire feeding command (current command).

### Step S5;

Of a plurality of pattern IDs set in advance in association with the material and plate thickness of the base metal targeted for welding, a kind of shield gas and type of the arc welding wire and the like, it is read out which has been selected/designated in this arc generating processing. This designationmaybe performed by the user in advance, for example, before starting the processing, and it may be possible to receive a portion of data (for example, data of thickness) through an external signal from an equipment on the upstream side in an assembly-line operation and finally select the ID.

FIG. 3 shows one example of the pattern ID to be prepared for. In this example, each ID has been designated by a combination of material and plate thickness of the base metal targeted for welding, a kind of shield gas and material of the arc welding wire. For example, ID=1 represents that the base metal targeted for welding is iron, the plate thickness is 0.8 mm, the shield gas is argon, and the arc welding wire is made of iron having 0.9 mm (diameter) , and ID=2 represents that the base metal targeted for welding is iron, the plate thickness is 1.0 mm, the shield gas is argon, and the arc welding wire is made of iron having 1.2 mm (diameter). Hereinafter, many IDs are prepared for as needed, and are selected in accordance with the processing conditions.

### Step S6;

An indicator (readout counter) I relating to a progress of the laser irradiation power transition is set to I=0 (initial value).

### Step S7;

From among a plurality of laser irradiation power transition patterns set in advance, those which are selected or designated in this arc generating processing are read. In this case, the selection or designation is executed for the pattern ID read in the step S5 through uniquely automatic selection of the laser irradiation power transition patterns. In accordance with a correspondence rule between an ID and a pattern, a laser irradiation power transition pattern will be automatically determined within the robot controller 1; for example, pattern 1 for ID =1 to 8, pattern 2 for ID =9 to 15, and pattern 3 for ID =16 to 20, in case where IDs are available from ID =1 to ID=20. In this respect, it goes without saying that in place of such a system, a mode in which the user can arbitrarily forcibly designate the laser irradiation power transition pattern may be prepared for in advance.

FIG. 4A to FIG. 4C show examples of the laser irradiation power transition pattern to be prepared for in the present embodiment. Of these patterns, the pattern 1 (FIG. 4A) is an example of power gradually-decreasing type continuous irradiation, the pattern 2 (FIG. 4B) is an example of power gradually-decreasing type pulse-like irradiation, and the pattern 3 (FIG. 4C) is an example of power-constant type continuous irradiation. In this respect, in general, the laser irradiation power in the transitions to be determined in these patterns is determined within such a range that the base metal 20 is prevented from burning through. Accordingly, a power lower than welding processing power (time average per period will be considered in the case of pulse) to be applied after the arc is generated is selected. Particularly since if laser irradiation is started, temperature at the base metal 20 will gradually rise and the burn easily occurs with the elapse of time,the transition having the gradually-decreasing tendency is desirable as seen with the pattern 1, 2.

### Step S8;

Laser irradiation will be performed under the condition corresponding to the indicator I designated in the pattern read in the step S7. In the first processing period, the indicator is I=0. Accordingly, if the step read in the step S7 is, for example, the pattern 2 (See FIG. 4B), the laser irradiation will be started under the condition of high level of 500W, low level of 100W and duty ratio of 50%.

### Step S9;

On the basis of a signal from an arc detection section in the welding device 3, it will be checked whether or not an arc has been generated. If no arc has been generated, the sequence will proceed to a step S10, and if an arc has been generated, the sequence will proceed to a step S15.

### Step S10;

The process is to stand by for a time period ΔT set in advance. The time period ΔT is a parameter for adjusting a degree of power transition, and an adequate value will be set in advance within a range of, for example, 0.0 second to 0.5 second. There can be a case of ΔT = 0 (no standby).

### Step S11;

The indicator (readout counter) I will be increased by 1.

### Step S12;

It will be checked whether or not the indicator (readout counter) exceeds a predetermined upper limit Imax. If it exceeds, the sequence will proceed to a step S13. If not, the sequence will return to the step S7. In this respect, since I= 1 in the second readout in the step S7, if for example, the pattern to be read in the step S7 is the pattern 2 (See FIG. 4B), the laser irradiation condition will be changed to a condition of high level of 490W, low level of 100W and the duty ratio of 50%.

### Step S13, 14;

Considering as an arc un-generated alarm, the laser irradiation will be stopped to complete the processing.

### Step S15;

If arc generation is detected, slipping out of the laser power command readout loop, the respective commands for the laser irradiation and arc will be changed to a command for processing. As described already, in the command for the processing, the laser power will be changed to be larger than before the arc is generated.

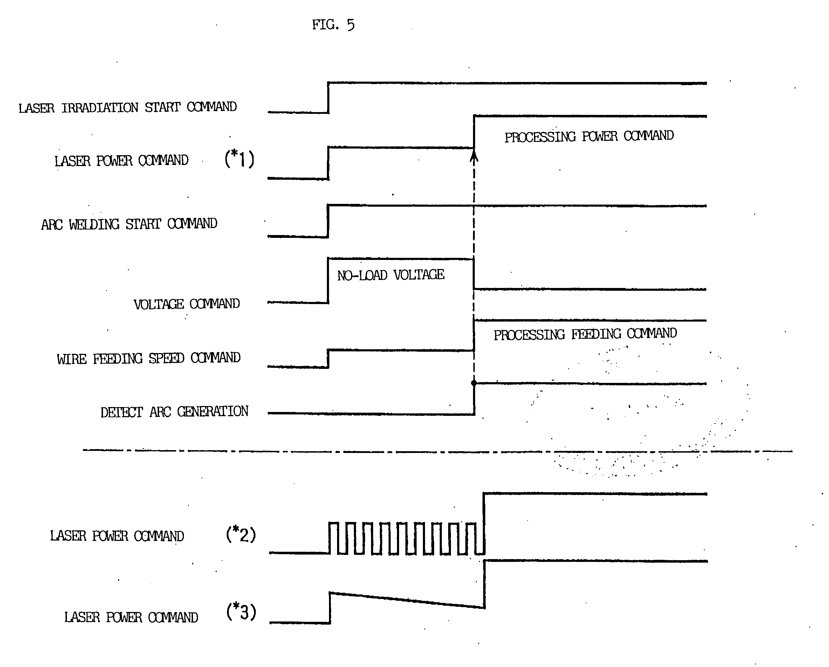

A process in which the arc start is executed by the foregoing processing is as shown in, for example, FIG. 5 using a timing chart.
(i) From the robot controller 1, a laser irradiation start command (preparation command) is issued to the laser oscillator, together with the laser power command condition before arc generation (See the above-described steps S1 and S5 to S11).
   In this case, the case of the laser power command (*1) corresponds to the case in which the above-described pattern 3 (See FIG. 4C) has been selected. Also, the case of the laser power command (*2) corresponds to the case in which an amount of heat input is suppressed in the above-described pattern 2. Further, the case of the laser power command (*3) corresponds to the case in which the amount of heat input is suppressed by a pattern for gradually reducing the laser power command. In this respect, a pattern for performing the laser power command (*2) and the laser power command (*3), for example, alternately can be effective.
(ii) An arc welding start command is issued to the arc welding power source together with the welding voltage and wire feeding speed commands (See the above-described steps S2 to S4).
   In this case, as described already, it is well known that there is also an arc welding power source having an interface of current command, equivalent to wire feeding speed command, in place of wire feeding speed command, and that in the case of a pulse arc welding power source and the like, commands for frequency, base current and the like also become necessary in addition to voltage and wire feeding commands (current command).
(iii) Before an arc welding command is issued and the wire comes into contact with the base metal, the voltage becomes no-load voltage. Also, as described above, before an arc is generated, wire feeding speed is often issued to a wire feeding machine at a speed slower than the command condition instructed for processing in the arc welding power source.
   The present timing chart shows that example.
(iv) When the tip 13 (See FIG. 1B) of the wire 12 comes into contact with the base metal 20 and an arc is generated, the arc welding power source detects the generation of arc and the arc generation detection information is inputted into the robot controller 1. On receipt of the arc generation detection information, the robot controller 1 changes the laser power command condition to the condition for processing (See the above-described steps S9, S12).

In this respect, in the embodiment described above, the arc generation detection information is given to the robot controller to control the laser oscillator. There will be no need to describe that even if the arc generation detection information is directly inputted into the laser oscillator and the laser power condition may be changed within the laser oscillator, the flow of information will be only changed and the operation effect similar to the above-described embodiment will be able to be obtained.

## Claims

1. An arc starting method in arc welding attended with laser irradiation for generating an arc between base metal targeted for welding and an arc welding wire by irradiating laser beams at a welding start position on said base metal targeted for welding or in its vicinity, feeding an arc welding wire and outputting welding voltage, comprising the steps of:
outputting, before generation of the arc is detected, a first-class laser irradiation power command determined in advance for the irradiation prior to start of discharge, and
outputting, after the generation of the arc is detected, a second-class laser irradiation power command determined in advance for the irradiation subsequent to the start of discharge, suitable for welding and different from said first-class laser irradiation power command.

2. The arc starting method in arc welding attended with laser irradiation according to Claim 1, wherein said first-class laser irradiation power command causes laser irradiation to be performed at a predetermined first laser irradiation power value, and wherein
said second-class laser irradiation power command is to cause laser irradiation to be performed at a predetermined second laser irradiation power value higher than said first laser irradiation power value.

3. The arc starting method in arc welding attended with laser irradiation according to Claim 1, wherein said first-class laser irradiation power command causes laser irradiation to be performed in accordance with a predetermined laser irradiation power transition pattern.

4. The arc starting method in arc welding attended with laser irradiation according to Claim 1, wherein said first-class laser irradiation power command causes laser irradiation to be performed in a pulse shape.

5. The arc starting method in arc welding attended with laser irradiation according to Claim 1, wherein, from among material and plate thickness of the base metal targeted for welding, a kind of shield gas and type of the arc welding wire, the laser irradiation power command value in said first-class laser irradiation power command, or the laser irradiation power transition pattern is selected or changed correspondingly to at least one setting.

6. A welding device for carrying out arc welding attended with laser irradiation having arc startingmeans for generating an arc between base metal targeted for welding and an arc welding wire by irradiating laser beams at a welding start position on said base metal targeted for welding or in its vicinity, feeding said arc welding wire and outputting welding voltage,
said arc starting means carrying out an arc startingmethod according to any of Claims 1 to 5.

7. A controller for controlling arc start in arc welding attended with laser irradiation for generating an arc between base metal targeted for welding and an arc welding wire by irradiating laser beams at a welding start position on said base metal targeted for welding or in its vicinity, feeding said arc welding wire and outputting welding voltage, comprising:
means for outputting, before generation of the arc is detected, a first-class laser irradiation power command determined in advance for the irradiation prior to start of discharge, and
means for outputting, after the generation of the arc is detected, a second-class laser irradiation power command determined in advance for the irradiation subsequent to the start of discharge, suitable for welding and different from said first-class laser irradiation power command.

8. The controller according to Claim 7, wherein
said first-class laser irradiation power command causes the laser irradiation to be performed at the predetermined first laser irradiation power value, and wherein
said second-class laser irradiation power command causes the laser irradiation to be performed at the predetermined second laser irradiation power value higher than said first laser irradiation power value.

9. The controller according to Claim 7, wherein said first-class laser irradiation power command causes the laser irradiation to be performed in accordance with the predetermined laser irradiation power transition pattern.

10. The controller according to Claim 7, wherein said first-class laser irradiation power command causes the laser irradiation to be performed in a pulse shape.

11. The welding device according to Claim 7, wherein, from among material and plate thickness of base metal targeted for welding, a kind of shield gas and type of the arc welding wire, the laser irradiation power command value in said first-class laser irradiation power command, or the laser irradiation power transition pattern is selected or changed correspondingly to at least one setting.

12. The controller according to Claim 7, wherein said controller is a controller for controlling a robot mounted with a processing head portion which executes arc welding for performing laser irradiation and arc welding on the base metal targeted for welding.
